# FASCICULE DE BREVET EUROPEEN

(11) **EP 0 526 337 B1**
(45) Date de publication et mention de la délivrance du brevet: **13.03.1996**
(21) Numéro de dépôt: 92402193.4
(22) Date de dépôt: 30.07.1992
(51) Int. Cl.: F21Q 1/00, B60Q 1/26, B60Q 1/28

(54) **Bloc de feux de signalisation à géométrie perfectionnée, notamment pour véhicules automobiles**
Geometrisch verbesserte Signalleuchteneinheit, insbesondere für Kraftfahrzeuge
Geometrically improved signal light assembly, particularly for vehicles

(30) Priorité: 02.08.1991 FR 9109869
(43) Date de publication de la demande: 03.02.1993
(73) Titulaire: VALEO VISION, F-93012 Bobigny Cédex (FR)
(72) Inventeur: Louy, Jean-François, F-75016 Paris (FR)
(74) Mandataire: Martin, Jean-Jacques

(56) Documents cités:
- FR-A- 2 226 259
- GB-A- 1 579 331

## Description

La présente invention concerne d'une façon générale les blocs de feux de signalisation pour véhicules automobiles.

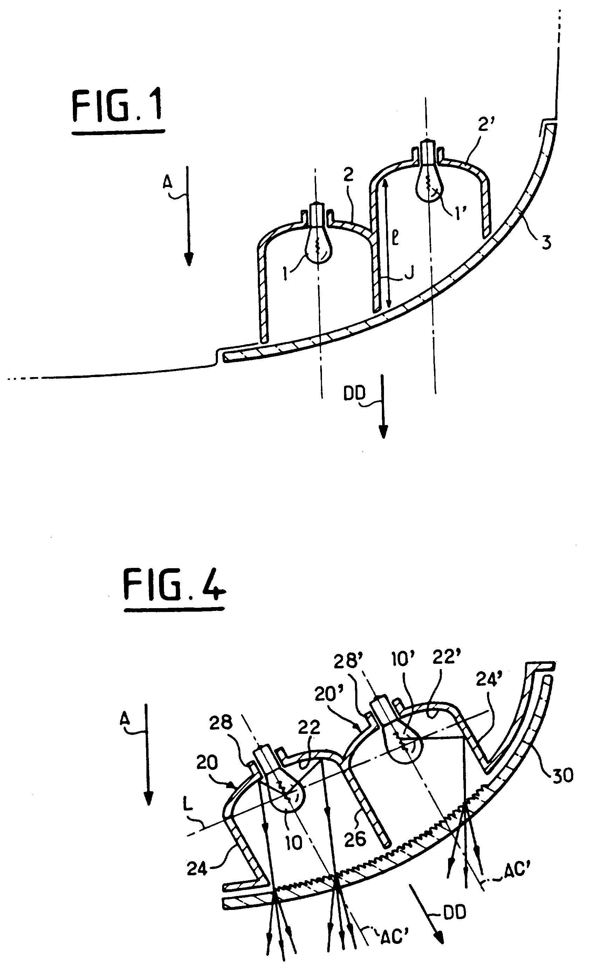

Un bloc de feux de conception classique est représenté sur la figure 1, qui est une vue en coupe horizontale schématique.

Il comprend deux compartiments 2, 2′ dans lesquels sont montées deux lampes 1, 1′. Une glace ou globe 3 est monté devant les compartiments (par rapport à la direction d'émission).

Dans les véhicules de conception récente, on tend à configurer la glace pour qu'elle s'adapte à la région de coin relativement arrondie du véhicule. En particulier, sa région située au droit des deux compartiments est relativement inclinée par rapport à un plan transversal à la direction axiale A du véhicule.

Il est également classique de réaliser les compartiments par moulage de matière plastique en une seule opération. Conventionnellement, la direction de démoulage DD est parallèle à la direction axiale A du véhicule, cette solution étant a priori la plus appropriée pour la conception des parties de moule correspondant aux fonds des compartiments, pouvant constituer des réflecteurs, car elle amène à une orientation axiale des lampes.

Par ailleurs, pour s'assurer que les ensembles compartiment-lampe individuels ne soient pas excessivement éloignés de la glace, et ainsi minimiser les pertes de flux lumineux, il est également classique d'étager les fonds des compartiments, comme illustré sur la figure 1, pour qu'ils suivent au moins approximativement, à une certaine distance, le profil de la glace 3.

Cet étagement des fonds de compartiments est cependant désavantageux en ce que le démoulage des compartiments selon la direction DD doit s'effectuer le long de surfaces d'étendue importante dans cette direction. En particulier, on observe que la joue J de séparation des deux compartiments présente une étendue l importante selon la direction DD.

Cette difficulté implique concrètement l'utilisation d'outils de moulage équipés de tiroirs, pour dégager les surfaces de moule correspondant à ces surfaces d'étendue importante préalablement au dégagement de la partie de moule correspondante selon la direction DD. Ceci accroît considérablement leur coût de revient et donc le coût de fabrication des compartiments.

On connaît par ailleurs par le document GB-A-1 179 331 un bloc de feux de signalisation pour véhicule automobile conforme au préambule de la revendication 1.

Toutefois, le problème indiqué ci-dessus ne se pose pas dans ce type de bloc de feux, du fait de la très faible inclinaison entre le plan de la glace d'une part, et le plan perpendiculaire à l'axe des collerettes et des joues d'autre part.

Ainsi, ce document ne suggère aucunement comment résoudre ledit problème.

La présente invention vise à pallier ces inconvénients de la technique antérieure et à proposer un bloc de feux de signalisation dans lequel les ensembles lampe/fond de compartiment puissent être tous situés à relative proximité d'une glace inclinée, sans qu'il soit nécessaire pour réaliser les compartiments d'utiliser un outil de moulage à tiroirs, et par conséquent avec un outil de moulage beaucoup plus économique.

Elle concerne à cet effet un bloc de feux de signalisation pour véhicule automobile ou analogue tel que défini dans la revendication 1.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels, outre la figure 1 déjà décrite :
la figure 2 est une vue en coupe horizontale schématique d'un bloc de feux de signalisation selon un premier mode de réalisation de l'invention,
la figure 3a est une vue en coupe horizontale partielle à échelle agrandie d'un détail de la figure 2,
la figure 3b est une vue en coupe verticale selon la ligne III-III de la figure 3a, et
la figure 4 est une vue en coupe horizontale schématique d'un bloc de feux de signalisation selon un deuxième mode de réalisation de l'invention.

On notera préliminairement que, d'une figure à l'autre, des éléments ou parties identiques ou similaires ont été désignés par les mêmes signes de référence.

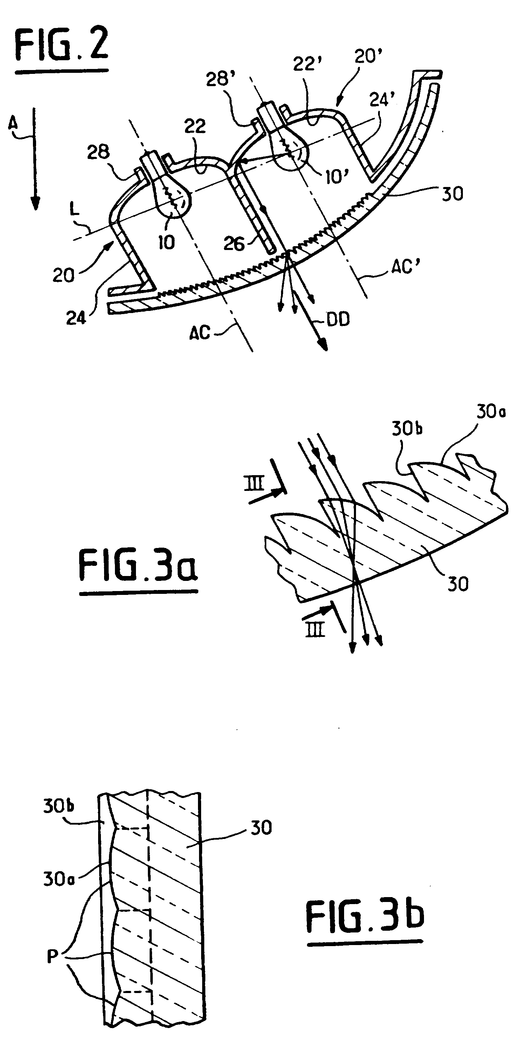

En référence tout d'abord à la figure 2, un bloc de feux selon l'invention comprend deux compartiments 20, 20' aux fonds desquels sont montées respectivement deux lampes 10, 10'. Une glace commune 30, de profil courbe destiné à épouser la forme arrondie de la région d'un coin, par exemple un coin arrière, du véhicule, est interposée sur le trajet des rayons lumineux sortant des compartiments.

Chaque compartiment 20, 20' comprend classiquement une surface de fond, respectivement 22, 22', qui peut ou non avoir subi un traitement réfléchissant, selon les exigences en matière de photométrie pour la fonction lumineuse considérée, et au moins des joues verticales, à savoir deux joues extérieures 24, 24', et une joue intermédiaire 26 assurant la séparation des flux lumineux des deux feux. Enfin chaque fond de compartiment 22, 22′ comporte une collerette, respectivement 28, 28′, pour le montage de la lampe associée.

Notamment pour éviter des pertes de flux lumineux excessives, ainsi que pour donner au bloc de feux, observé de l'extérieur, un aspect aussi homogène que possible lorsque les feux sont éteints, les fonds de compartiments et les lampes sont disposés selon une ligne au moins approximativement parallèle au profil horizontal de la glace (ligne L en traits mixtes).

Selon l'invention, on réalise les compartiments 20a, 20b à l'aide d'un outil de moulage tel que la direction de démoulage DD est sensiblement inclinée par rapport à la direction axiale A du véhicule, qui doit être également en général la direction moyenne du rayonnement lumineux émis par chaque feu. De préférence, cette direction de démoulage DD est au moins approximativement perpendiculaire à la ligne L, c'est-à-dire à la direction générale du profil horizontal de la glace 30.

En corollaire, les collerettes 28, 28′ ont des axes AC, AC′ parallèles à la direction oblique DD, et les joues 24, 24′, 26 s'étendent dans des plans (de préférence des plans verticaux) parallèles à la direction de démoulage.

On peut observer que, du fait de ce choix particulier de la direction de démoulage des compartiments, on obtient un étagement des feux, par rapport à un plan transversal à l'axe A, sans que les joues ne présentent une longueur excessive.

Dans l'exemple de réalisation de la figure 2, les surfaces de fond 22, 22′ des compartiments 20, 20′ sont des surfaces du genre paraboloïdal d'axes respectifs AC, AC′, capables de former un rayonnement réfléchi essentiellement parallèle à ces axes. Les surfaces du genre paraboloïdal peuvent avoir reçu ou non un traitement réfléchissant (par exemple métallisation sous vide), selon l'intensité du rayonnement à émettre dans la direction axiale du véhicule.

Maintenant en référence aux figures 3a et 3b, la glace 30 est avantageusement réalisée de façon à assurer aussi simplement et économiquement que possible à la fois le redressement de ces rayonnements inclinés jusque dans une direction moyenne essentiellement parallèle à la direction A et la diffusion de ce rayonnement autour de cette direction moyenne, en vue de satisfaire aux règlements en matière de photométrie. A cet effet, une surface de la glace 30, en l'occurence sa surface intérieure, présente une succession d'éléments du genre prismatique, comportant des surfaces inclinées 30a séparées par des dépouilles 30b essentiellement parallèles au rayonnement incident. Les surfaces inclinées 30a d'entrée de la lumière sont divisées en pavés individuels P de surface convexe, à la manière des billes de diffusion classiquement prévus sur des glaces de feux planes. L'inclinaison des surfaces d'entrée de ces pavés assure, en l'espèce par réfraction, le redressement du rayonnement pour l'amener dans une direction moyenne parallèle à la direction A, tandis que la forme bombée des pavés élémentaires assure, simultanément, une diffusion contrôlée de ce rayonnement.

Bien entendu, on peut également utiliser des pavés individuels à surface concave. On peut également, si le redressement demandé est important, utiliser des éléments du genre prismatique à réflexion totale.

En variante non illustrée, le redressement du rayonnement peut être réalisé concevant la glace avec deux couches de manière transparente ou translucide d'indices différents, des billes de diffusion ou analogues étant prévus dans l'une des couches.

On va maintenant décrire en référence à la figure 4 un deuxième mode de réalisation de l'invention. Les divers éléments ou parties sont pour l'essentiel identiques à ceux de la figure 2 et désignés par les mêmes signes de référence. Ils ne seront pas décrits à nouveau.

Selon ce mode de réalisation, les surfaces de fond 22, 22' des compartiments 20, 20' sont conçues pour former directement un rayonnement réfléchi dont la direction moyenne est essentiellement parallèle à la direction axiale A du véhicule. Il peut s'agir de surfaces du genre paraboloïdal d'axes AF, AF' essentiellement parallèles à A, ou encore de surfaces dites évolutives capables de respecter cette direction moyenne tout en faisant en sorte que la majorité du flux réfléchi atteigne la zone de la glace située en vis-à-vis de l'ouverture du compartiment correspondant, afin notamment d'optimiser le rendement lumineux et d'éviter des réflexions parasites sur les joues.

On prévoit sur la glace 30 des billes assurant une diffusion adaptée au cas d'espèce.

Bien que l'invention ait été décrite dans le contexte d'un bloc de feux comportant deux feux côte-à-côte, elle s'applique bien entendu également à des blocs de feux comportant trois feux ou davantage côte-à-côte.

## Revendications

1. Bloc de feux de signalisation pour véhicule automobile ou analogue, du type comprenant au moins deux feux comportant chacun une lampe (10, 10'), un compartiment (20, 20'), et une glace de fermeture (30), les compartiments des feux étant réalisés d'un seul tenant par moulage et étant chacun pourvus d'une collerette (28, 28') pour le montage de la lampe associée et au moins une joue (24, 24', 26) de séparation avec le ou les feux voisins, les joues et les collerettes s'étendant selon une même direction (AC, AC') parallèle à une direction de démoulage (DD) des compartiments, caractérisé en ce qu'une région de la glace qui s'étend en vis-à-vis des ouvertures de sortie des compartiments s'étend en oblique par rapport à un plan transversal à la direction générale d'émission de la lumière et en ce que ladite direction des joues et des collerettes est oblique par rapport à la direction générale d'émission de la lumière.

2. Bloc de feux selon la revendication 1, caractérisé en ce que la direction de démoulage (DD) est essentiellement perpendiculaire à une direction générale (L) du profil horizontal de la glace en vis-à-vis des ouvertures des compartiments.

3. Bloc de feux selon la revendication 1 ou 2, caractérisé en ce qu'au moins un compartiment (20, 20') comporte une surface de fond (22, 22′) du genre paraboloïdal dont l'axe est essentiellement parallèle la la direction de démoulage (DD).

4. Bloc de feux selon la revendication 3, caractérisé en de que la glace (30), dans sa région située en vis-à-vis de l'ouverture dudit compartiment dont la surface de fond est du genre paraboloïdal, comporte des moyens de redressement et de diffusion de la lumière (P).

5. Bloc de feux selon la revendication 4, caractérisé en ce que les moyens de redressement et de diffusion de la lumière présentent la forme d'éléments du genre prismatique (30a) comportant des pavés concaves ou convexes.

6. Bloc de feux selon la revendication 5, caractérisé en ce que la surface (30a) comportant des pavés concaves ou convexes (P) est une face d'entrée de la lumière.

7. Bloc de feux selon l'une des revendications 1 et 2, caractérisé en ce qu'au moins un compartiment (20, 20′) comporte une surface de fond (22, 22′) capable de produire un rayonnement réfléchi dont la direction moyenne est inclinée par rapport à l'axe de démoulage et essentiellement parallèle à la direction axiale du véhicule, et en ce que la glace (30), dans sa région située en vis-à-vis du ou de chaque compartiment, comporte des moyens de diffusion de la lumière.

## Patentansprüche

1. Signalleuchteneinheit für Kraftfahrzeuge oder ähnliches in der Ausführung mit mindestens zwei Leuchten, die jeweils aus einer Lampe (10, 10'), einer Kammer (20, 20') und einer Streuscheibe (30) bestehen, wobei die Kammern der Leuchten einstückig durch Formpressen hergestellt werden und jeweils mit einem Kragen (28, 28') für den Einbau der zugehörigen Lampe sowie mit mindestens einer Seitenwand (24, 24', 26) für die Abtrennung von der oder den benachbarten Leuchten versehen sind, wobei sich die Seitenwände und Kragen in einer gleichen Richtung (AC, AC') erstrecken, die parallel zu einer Entformungsrichtung (DD) der Kammern verläuft, **dadurch gekennzeichnet**, daß ein Bereich der Streuscheibe, der sich gegenüber den Austrittsöffnungen der Kammern erstreckt, schräg im Verhältnis zu einer Ebene verläuft, die quer zur allgemeinen Lichtabstrahlungsrichtung angeordnet ist, und daß die besagte Richtung der Seitenwände und Kragen schräg im Verhältnis zur allgemeinen Lichtabstrahlungsrichtung verläuft.

2. Signalleuchteneinheit nach Anspruch 1, **dadurch gekennzeichnet**, daß die Entformungsrichtung (DD) im wesentlichen senkrecht zu einer allgemeinen Richtung (L) des horizontalen Profils der Streuscheibe gegenüber den Öffnungen der Kammern verläuft.

3. Signalleuchteneinheit nach Anspruch 1 oder 2 , **dadurch gekennzeichnet** , daß mindestens eine Kammer (20, 20') eine Bodenfläche (22, 22') in Form einer Paraboloidfläche umfaßt, deren Achse im wesentlichen parallel zur Entformungsrichtung (DD) verläuft.

4. Signalleuchteneinheit nach Anspruch 3, **dadurch gekennzeichnet**, daß die Streuscheibe (30) in ihrem Bereich gegenüber der Öffnung der besagten Kammer, deren Boden aus einer Paraboloidfläche besteht, Richt- und Streumittel für das Licht (P) umfaßt.

5. Signalleuchteneinheit nach Anspruch 4, **dadurch gekennzeichnet** , daß die Richt- und Streumittel für das Licht die Form von Prismenelementen (30a) aufweisen, die konkave oder konvexe Blöcke umfassen.

6. Signalleuchteneinheit nach Anspruch 5, **dadurch gekennzeichnet** , daß die Fläche (30a) mit konkaven oder konvexen Blöcken (P) eine Lichteintrittsfläche ist.

7. Signalleuchteneinheit nach einem der Ansprüche 1 und 2, **dadurch gekennzeichnet**, daß mindestens eine Kammer (20, 20') eine Bodenfläche (22, 22') umfaßt, die eine reflektierte Strahlung erzeugen kann, deren mittlere Richtung im Verhältnis zur Entformungsrichtung geneigt und im wesentlichen parallel zur axialen Richtung des Fahrzeugs verläuft, und daß die Streuscheibe (30) in ihrem Bereich gegenüber der oder jeder Kammer Lichtstreumittel umfaßt.

## Claims

1. A signal light block for a motor vehicle or the like, the block being of the type comprising at least two lights each including a lamp (10, 10'), a compartment (20, 20'), and a cover glass (30), the compartments of the lights being made as a single piece by molding, and each of them being provided with a collar (28, 28') for mounting the associated lamp, and with at least one wall (24, 24', 26) separating it from the adjacent light(s), the walls and the collars extending in a common direction (AC, AC') parallel to the unmolding direction (DD) of the compartments, the block being characterized in that a region of the glass extending over the outlet openings of the compartments extends obliquely relative to a plane that is transverse to the general light emission direction, and in that said direction of the walls and the collars is oblique relative to the general light emission direction.

2. A light block according to claim 1, characterized in that the unmolding direction (DD) is essentially perpendicular to a general direction (L) of the horizontal profile of the glass where it covers the openings of the compartments.

3. A light block according to claim 1 or 2, characterized in that at least one compartment (20, 20') has a back surface (22, 22') of the paraboloid type with its axis being essentially parallel to the unmolding direction (DD).

4. A light block according to claim 3, characterized in that the glass (30), in its region covering the opening of said compartment whose back surface is of the paraboloid type includes means (P) for deflecting and diffusing light.

5. A light block according to claim 4, characterized in that the means for deflecting and diffusing light are in the form of prismatic type elements (30a) comprising concave or convex pebbles.

6. A light block according to claim 5, characterized in that the surface (30a) having concave or convex pebbles (P) is a light admission face.

7. A light block according to claim 1 or 2, characterized in that at least one compartment (20, 20') has a back surface (22, 22') capable of producing a reflected beam whose mean direction is inclined relative to the unmolding axis and is essentially parallel to the axial direction of the vehicle, and in that the glass (30) in its region covering the, or each, compartment, includes means for diffusing light.
